Europäisches Patentamt

European Patent Office

Office européen des brevets

(19)

(11) Veröffentlichungsnummer: **0 278 294 B1**

## (12) EUROPÄISCHE PATENTSCHRIFT

(45) Veröffentlichungstag der Patentschrift: **16.09.92**

(21) Anmeldenummer: **88100973.2**

(22) Anmeldetag: **22.01.88**

(51) Int. Cl.⁵: **F16L 23/00**, F16L 9/22

(54) **Leitungselement für einen Flachkanal zur Leitung von gasförmigen Medien.**

(30) Priorität: **13.02.87 DE 3704633**

(43) Veröffentlichungstag der Anmeldung:
**17.08.88 Patentblatt 88/33**

(45) Bekanntmachung des Hinweises auf die
Patenterteilung:
**16.09.92 Patentblatt 92/38**

(84) Benannte Vertragsstaaten:
**AT BE CH DE FR GB IT LI LU NL SE**

(56) Entgegenhaltungen:
**DE-U- 7 417 753**
**DE-U- 8 205 068**
**US-A- 4 328 981**

(73) Patentinhaber: **Schmalhofer, Markus**
**Robert-Bosch-Strasse 15**
**W-8350 Plattling(DE)**

(72) Erfinder: **Schmalhofer, Markus**
**Robert-Bosch-Strasse 15**
**W-8350 Plattling(DE)**

(74) Vertreter: **Riederer Freiherr von Paar zu Schönau, Anton**
**Lederer, Keller & Riederer, Freyung 615,**
**Postfach 26 64**
**W-8300 Landshut(DE)**

## Beschreibung

Die Erfindung betrifft ein Leitungselement eines Flachkanals zur Leitung von gasförmigen Medien, nach dem Oberbegriff des Anspruchs 1.

Solche Leitungselemente, die zu einem Flachkanal zusammenzusetzen sind, sind beispielsweise aus der DE-U-8 205 068 bekannt. Dort wird ein Blechzuschnitt zu einem Vierkantrohr geformt und entlang einer Längsverbindungslinie zusammengeschweißt, und werden stirnseitig doppelt umgebogene Flansche hergestellt, in deren durch Ausklinkungsbereiche gebildete Ecklücken Ergänzungsstücke eingeschweißt werden, die sowohl den stirnseitigen Flansch als auch den von diesem wiederum nach hinten abgebogenen Stabilisierungsstreifen so ergänzen, daß rückseitig um die stirnseitige Rohröffnung eine umlaufende Nut entsteht. Durch diese Formgebung ergibt sich eine gewisse Verwindungssteifigkeit, die achsparallele Schweißnaht des Leitungselements erweist sich jedoch in mancher Hinsicht als nachteilig, wie noch erläutert wird.

Für große Anlagen, bei denen Gasdichtheit verlangt wird, sind nach dem üblichen Stand der Technik die Längskanten der Kanalwand miteinander verschweißt, und dies bringt eine Reihe wesentlicher Nachteile mit sich.

So sind die Schweißnähte dem Gas und den im Gas mitgeführten aggressiven Bestandteilen zugänglich und sind nicht, etwa durch Verzinkung, korrosionsgeschützt. Bei der Leitung aggressiver Medien besteht somit Korrosionsgefahr. Weiter ergibt sich im Fall angeschweißter Stirnflansche nach DIN 24155 entsprechende Korrosionsgefahr an der innen liegenden Schweißnaht zwischen dem Stirnflansch und der Kanalwand. Die Verwendung eines massiven Flansches etwa gemäß DIN 24 155 ergibt auch einen erheblichen Materialverbrauch und führt damit zu relativ hohen Kosten, die dadurch noch weiter erhöht werden, daß die Ausrichtung und Anschweißung der Stirnflansche einer Automatisierung nur schwer zugänglich ist und somit hohe Personalkosten erfordert.

Ein wesentliches Problem besteht weiter darin, daß derartige Leitungselemente zwangsläufig herstellerseitig in verschweißter Ausführung bereitgestellt und geliefert werden müssen. Das bedeutet erhebliche Transportkosten, da die fertigen Leitungselemente nur nebeneinander gelagert und transportiert werden können und der volle Leitungsquerschnitt als Sperraum anfällt. Es bedeutet weiterhin Montageschwierigkeiten, da die so vollständig vorgefertigten Leitungselemente nur als Ganzes montiert werden können, was häufig zu Schwierigkeiten infolge des hohen Gewichtes und/oder im Hinblick auf beengte Einbauverhältnisse führt. Weiter ist ein solches Leitungselement zwangsläufig nicht demontierbar und eignet sich auch in keiner Weise für eine Zusammensetzung aus einem Bausatz von Einzelelementen, da Ober- und Unterteil immer nur einen ganz bestimmten Leitungsquerschnitt ergeben. Im Falle von Umrüstungen auf andere Leitungsquerschnitte muß daher stets ein voller Austausch des gesamten Kanales erfolgen. Weiterhin ergibt sich der praktische Nachteil, daß eine einfache Aufhängung des Kanales nur im Bereich der Stirnflansche möglich ist, da der äußere Kanalumfang ansonsten keine Angriffspunkte für Aufhängemittel bietet.

Eine Unterteilung eines Flachkanals in Kanalsektorteile, die entlang achsparallelen Flanschen miteinander verschraubt werden, ist bekannt aus der US-A-4 328 981. Sie ergibt die Möglichkeit, den Unterteil des Kanals einstückig wannenförmig auszubilden, so daß dort mit Ausnahme des Stoßes an den Stirnflanschen keinerlei Verbindungsstellen vorhanden sind, die insbesondere im Falle eines sich bildenden Sumpfes an aggressiven Medien zu Leckagen führen könnten. Die Kanalsektorteile weisen nach außen umgebogene Verbindungsflansche auf, die zur Verbindung mit entsprechenden Verbindungsflanschen eines benachbarten Kanalsektorteils dienen. Die Klaffung der Stirnflansche im Eckbereich ist durch Einsetzen von Ergänzungsteilen geschlossen. Beim Gegenstand der US-A-4 328 981 handelt es sich nicht um ein Leitungselement zur Bildung eines Flachkanals aus einer Mehrzahl hintereinander geschalteter Leitungselemente, sondern um eine Flachkanalkonstruktion, die an eine Öffnung in der Seitenwand eines quer dazu verlaufenden Flachkanals anschließt. Die zur Erzielung guter Gasdichtheit erforderliche Stabilität einer solchen Konstruktion ist gering, da die Ausbildung der zu verschraubenden Flansche nicht unerhebliche Verformungen unter dem Arbeitsdruck zuläßt, indem die erforderliche Biegefestigkeit der Flansche um in der Flanschebene liegenden Achsen nur durch übermäßige Wandstärken erreicht werden kann. Durch Verformungen der großflächigen Kanalwände unter dem Arbeitsdruck werden Biegemomente um die in der Flanschebene liegende Achsen in den Flansch eingeleitet und führen zu komplexen Kippbewegungen der Flansche aus der Flanschebene hinaus und dadurch zu Gasundichtheiten. Diese Stirnflanschkonstruktionen bieten keinerlei Möglichkeit einer Einwirkung zur Stabilisierung der zwischen den Stirnflanschen liegenden Kanalwände.

Zur Erreichung einer ausreichenden Stabilität der Kanalwände für gasdichte Großlüftungsanlagen ist es daher erforderlich, entweder die Länge der Leitungselemente gering zu halten oder aber hohe Wandstärken zu verwenden.

Die Konstruktion nach der US-A-4 328 981 eignet sich weiterhin auch deswegen nicht zur Bildung eines standardisierten Leitungselements, weil das Einbringen der Löcher in den doppellagigen Stirnflansch nur durch nachträgliches Bohren erfolgen kann, was für ein Standardbauteil unvertretbar hohe Herstellungskosten ergibt. Ein vorheriges kostengünstigeres Stanzen der Löcher im planen Zuschnitt ist nicht möglich, da die Schraublöcher nicht nur durch den Stirnflansch, sondern auch durch den Streifen der umgelegten zweiten Lage geführt werden müssen und die vorgestanzten Löcher nach dem Umschlagen nicht mit der erforderlichen Sicherheit in die notwendige fluchtende Lage gelangen können. Bei dem Versuch der Verwendung der Konstruktion der US-A-4 328 981 als Leitungselement für einen längeren Flachkanal müßten die Verbindungsschrauben darüber hinaus die vierfache Materialstärke der Kanalwand durchsetzen und somit in aller Regel als Dehnschrauben ausgebildet werden, um die bei dieser Stärke der Flanschverbindung auftretenden Dehnungen ausgleichen zu können. Dies führt zu einer mechanisch unerwünschten Elastizität der Flanschverbindung mit entsprechend verminderter Gasdichtheit. Schließlich führt eine Konstruktion entsprechend der US-A-4 328 981 überdies zu einer Beschränkung hinsichtlich der Materialauswahl, da die Bildung der scharfen Kante zwischen dem Stirnflansch und dem auf dessen Rückseite umgeschlagenen Verlängerungsstreifen eine außerordentlich gute Verformbarkeit des Materials voraussetzt. Somit scheiden für die Herstellung solcher Leitungselemente an sich bevorzugte Materialien wie eine Reihe gängiger Aluminiumlegierungen wegen zu hoher Sprödigkeit aus.

Gegenüber dem erläuterten gattungsgemäßen Stand der Technik liegt der Erfindung die Aufgabe zugrunde, ein Leitungselement für große Anlagen zu schaffen, das ohne eine Verwendung von dem Leitungsmedium ausgesetzten Schweißnähten durch Zusammenbau unterschiedlicher Leitungselemente aus einem Bausatz mit standardisierten Bauelementen herstellbar ist und darüber hinaus auch bei vergleichsweise geringen Wandstärken eine hohe Stabilität gegen Verformungen unter dem Arbeitsdruck und somit eine entsprechend hohe Gasdichtheit ermöglicht.

Die Lösung dieser Aufgabe erfolgt durch die kennzeichnenden Merkmale des Anspruchs 1.

Dadurch, daß die Leitungselemente aus Kanalsektorteilen mit Verbindungsflanschen mit umlaufenden zurückgebogenen Stabilisierungsstreifen versehen sind, sind sie modulartig aufbaubar und weisen dabei hohe Stabilität und infolgedessen hohe Dichtigkeit auf. Zur Erzeugung von Gasdichtheit ist keine Verschweißung erforderlich, sondern die Kanalsektorteile und Leitungselemente können z. B. verschraubt werden, ohne daß eine zu dichte Anordnung der Schrauben gewählt werden muß oder Undichtheiten zu befürchten wären. Dadurch, daß die Stirnflansche aus dem Material der Kanalwand einstückig an diese angeformt sind und im Anschluß an die Verbindungsstirnfläche einen zurückgebogenen Stabilisierungsstreifen aufweisen, entfällt die Notwendigkeit der Verwendung separater Flansche, die wiederum erfordern würden, daß die Randstreifen der Verbindungskanten auf der gegenüberliegenden Seite der Kanalwand wie die Flansche zu liegen kommen; andernfalls müßten die Randstreifen der Verbindungskanten im Bereich der Flansche ausgeklinkt werden und wäre dort keine Gasdichtheit zu erzielen, schon weil die zwangsläufig nachträgliche Verschweißung das Dichtmittel zerstören würde. Das erfindungsgemäße Leitungselement eignet sich also auch für gasdichte Großkanäle. Da die Randstreifen der Verbindungskanten und die Stirnflansche auf derselben Seite der Kanalwand angeordnet sind, ergibt sich auf einer gewünschten Seite eine völlig glatte Kanalwand, wobei im Falle großer Kanäle auch die Randstreifen und die Stirnflansche an der Innenseite der Kanalwand vorspringend angeordnet sein können und dort die Montage erfolgen kann. Die aus zweifach umgebogenem Blech gebildeten, zusammenhängend entlang den Stirnseiten und den Längsverbindungslinien abstehenden Verbindungsflansche weisen im Hinblick auf den zusammenhängend umlaufenden Stabilisierungsstreifen hohe Steifheit auf und sind daher in hervorragendem Maße geeignet, die Verbindungen herzustellen. Zusätzlicher Materialverbrauch entfällt ebenso wie die Schwierigkeit der Abstimmung der genormten Teile aufeinander. Dichtprobleme ergeben sich nicht, da die Randstreifen an den Verbindungskanten bis zur Verbindungsstirnfläche durchlaufen und mit Dichtmittel voll abgedichtet sein können, welches durch keine Schweißungen gefährdet wird.

Da vorausgesetzt ist, daß das Metallblech im Bereich wenigstens einer Eckkante des Flachkanals einstückig ausgebildet ist, kann eine wannenförmige Ausbildung der unteren Hälfte des Flachkanals problemlos erzielt werden, wenn zwei benachbarte Eckkanten und deren Verbindungswand entsprechend einstückig ausgebildet werden. Andererseits kann aber auch nur ein Eckbereich auf diese Weise ausgebildet werden, der dann einen Anschluß unterschiedlicher Wandteile ermöglicht, um so nach Art eines Bausatzes aus standardisierten Teilen Flachkanäle unterschiedlicher Abmessungen je nach Bedarf zusammenzusetzen, wobei natürlich auch eine untere einstückige Wanne mit einem mehrteiligen und hinsichtlich seiner Höhe variablen Oberteil verbunden werden kann.

Das Ergänzungsteil soll gemäß Anspruch 1 die um die Kontur des Kanalteilsegments verlaufende Nut nicht unterbrechen. Zweckmäßigerweise ist in Übereinstimmung mit dem Stand der Technik (DE-U-8 205 068) ein der Kontur der Klaffung angepaßtes und der Flanschstärke entsprechendes Ergänzungsteil eingeschweißt, so daß sich, nach entsprechendem Verschleifen der Einsetzstelle, der Eindruck einer einstückigen Verbindungsstirnfläche ohne jegliche Unterbrechung ergibt, wobei im Eckbereich der Klaffung durchaus auch eine Verschraubung vorgenommen werden kann. Das Einschweißen und Verschleifen stellt einen einfachen automatisierbaren Vorgang dar, der nur geringe Mengen an Schweißmaterial benötigt. Hierbei ist es besonders bevorzugt, gemäß Anspruch 2 das Ergänzungsteil durch eine hinterlegte Winkellasche zu bilden, die im Bereich der Klaffung durch eine Abkröpfung in die Ebene des Stirnflansches gebracht ist.

Zweckmäßig ist in jedem Falle die Teilung in ein Oberteil und ein Unterteil, welches gemäß Anspruch 3 als einstückige Wanne ausgebildet sein kann, wenn dies den Erfordernissen des Einsatzfalles entspricht. Auf diese Weise können die Teile im unmontierten Zustand transportiert werden, was ganz erheblich geringere Transportvolumen zur Folge hat. Die Teile können weiterhin bei Bedarf und beengten Einbauverhältnissen einzeln montiert werden, also erst an ihrem tatsächlichen Einbauort vollends zusammengesetzt und verschraubt werden.

Zur Verbesserung der Dichtung insbesondere im Bereich der Verbindungsstirnflächen wird häufig die Einbringung einer Dichtrille gefordert, in welche das Dichtmaterial hineinverpreßt wird. Gemäß Anspruch 4 ist daher bevorzugt eine Dichtrille in der Verbindungsstirnfläche vorgesehen, die im Unterschied zu genormten Flanschen in einem Zuge bei der Herstellung des Flansches mit eingebracht werden kann und daher praktisch keinen Zustzaufwand erfordert.

Besonders bevorzugt ist gemäß Anspruch 5, wenn sowohl die Stirnflansche als auch die Randstreifen der Verbindungskanten nach außen abgebogen sind. Hierdurch ergibt sich einerseits eine glatte, reinigungsfreundliche Innenwand und andererseits durch die zurückgebogenen Stabilisierungsstreifen eine Einstecknut an der Außenseite des Kanalteiles rings um dessen Kontur. Dies ist in mehrfacher Hinsicht von Vorteil. Die entsprechende Nut an den axialen Verbindungskanten eignet sich in besonderer Weise zur Aufhängung des Flachkanales an beliebigen Stellen entlang seiner gesamten Länge je nach den Erfodernissen des Einbaufalles. Die entsprechende Nut an den Rückseiten der Stirnflansche eignet sich gemäß Anspruch 6 insbesondere für die Abstützung von Dämmaterial an der Außenseite der Kanalwand, was beim gattungsgemäßen Stand der Technik immer eine besondere Problematik darstellt. Besonders vorteilhaft kann hierbei gemäß Anspruch 7 auf Profilleisten zurückgegriffen werden, die beidseitig in die Nuten an den Rückseiten der einander gegenüberliegenden Stirnflansche eingeschoben und dort bei Bedarf mit Blindnieten oder dergleichen zusätzlich arretiert werden können. Diese dienen dann zusammen mit den umlaufenden randseitigen Nuten für eine saubere Abstützung von Dämmplatten sowie diese übergreifenden Abdeckbleche. Als Profilleisten können zweckmäßig Z-Profile oder T-Profile verwendet werden.

Weitere Einzelheiten, Merkmale und Vorteile der Erfindung ergeben sich aus der nachfolgenden Beschreibung von Ausführungsformen anhand der Zeichnung.

Es zeigt

Fig. 1 eine perspektivische Darstellung eines wannenförmig geschlossenen Unterteiles eines erfindungsgemaßen Leitungselements,

Fig. 2 eine Fig. 1 entsprechende perspektivische Darstellung eines Eckteiles eines erfindungsgemäßen Leitungselementes, bei dem die Anbringung von Dämmaterial veranschaulicht ist,

Fig. 3 in einer den Fig. 1 und 2 entsprechenden Darstellung ein aus Bausatzelementen aufgebautes Unterteil eines erfindungsgemäßen Leitungselementes und

Fig. 4 eine Stirnansicht eines nach Art eines Bausatzes aufgebauten erfindungsgemäßen Leitungselementes.

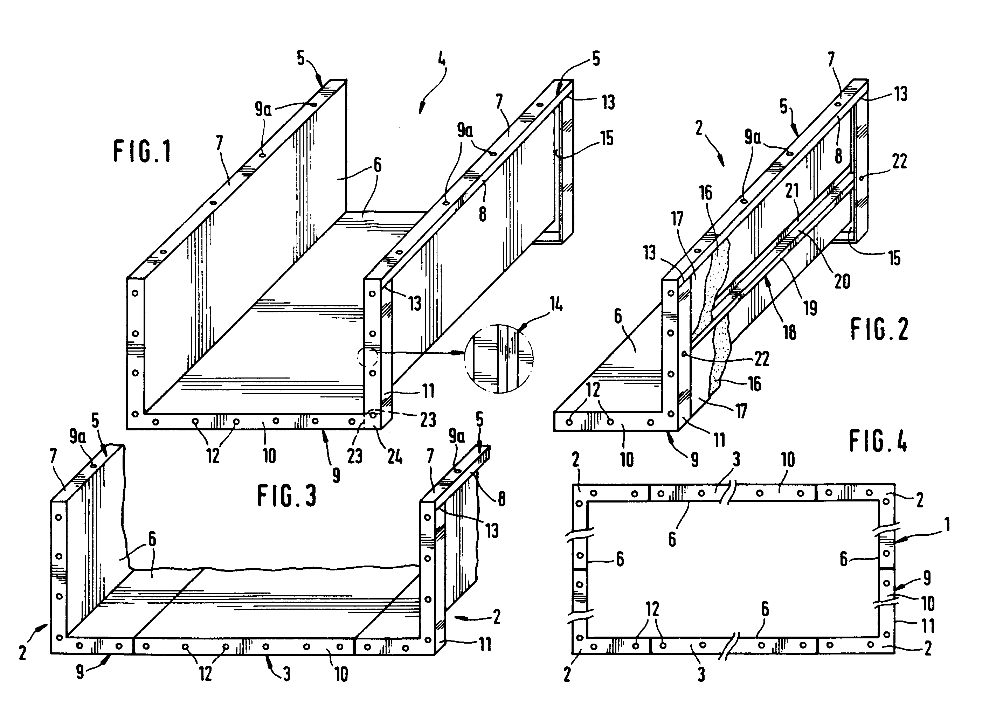

Wie insbesondere die Figuren 1 bis 3 veranschaulichen, kann ein in Fig. 4 in Draufsicht insgesamt dargestelltes Leitungselement 1 für einen Flachkanal schweißnahtfrei aus einstückig gebogenen Blechteilen hergestellt werden. Als Material dient insbesondere korrosionsbeständiges Metallblech wie Aluminium, V4A-Stahl oder dergleichen, es kommt jedoch auch PVC oder ein ähnlicher Kunststoff in Frage. Wie insbesondere aus Fig. 2 ersichtlich ist, wird wenigstens ein dort veranschaulichtes und mit 2 bezeichnetes einstückiges Eckteil zur Verfügung gestellt, welches, wie die Figuren 3 und 4 zeigen, mit ebenen Verbindungsteilen 3 zur Bildung des Leitungselementes 1 zusammengebaut werden kann. Alternativ können auch zwei Eckteile benachbart einstückig ausgeführt werden, um ein in Fig. 1 veranschaulichtes wannenförmiges Unterteil 4 zu bilden, wie dies vielfach gefordert wird. Zur Bildung des Leitungselementes 1 kann dieses wannenförmige Unterteil 4 mit einem entsprechend wannenförmig, umgekehrt aufgesetzten Oberteil kombiniert werden, oder auch mit einem aus mehreren Eckteilen 2 und Verbindungsteilen 3 zusammengesetzten Oberteil. Weiter kann auch das gesamte Leitungselement 1 einstückig hergestellt und mit einer einzigen Verbindungskante umfangsseitig geschlossen werden. Die Verbindungskanten sind bei sämtlichen Ausführungsformen mit dem Bezugzeichen 5 versehen, ebenso wie zur Erleichterung der Übersichtlichkeit sämtliche analoge Teile in den einzelnen Figuren mit gleichen Bezugszeichen versehen sind.

Die Verbindungskanten 5 weisen im Beispielsfalle von der mit 6 bezeichneten Kanalwand nach außen umgebogenen Randstreifen 7 auf, die an ihrem äußeren Rande einen zurückgebogenen Stabilisierungsstreifen 8 besitzen. Dadurch werden die Randstreifen 5 erheblich ausgesteift, so daß die Verbindungskanten 5 äußerst hohe mechanische Stabilität besitzen. Auf diese Weise ist es möglich, die Randstreifen 7 an den Verbindungskanten 5 mechanisch miteinander zu verbinden, ohne daß trotz Zwischenschaltung eines Dichtmittels Undichtheiten auftreten können. Im Beispielsfalle sind für die Verbindung entsprechende Schraublöcher 9a vorgesehen. Es könnte jedoch die Verbindung auch mit Klammern oder Agraffen erfolgen, welche die benachbarten Stabilisierungsstreifen 8 einer Verbindungskante 5 übergreifen und zusammenspannen. Die Randstreifen 7 reichen über die gesamte Länge des Leitungselementes 1 ohne Unterbrechung und bilden so über die gesamte Länge eine saubere Dichtfläche.

An den Stirnseiten des Leitungselementes 1 sind Stirnflansche 9 angesetzt, die aus dem Material der Kanalwand 6 durch Umbiegen gebildet sind. Die Stirnflansche 9 weisen jeweils eine Verbindungsstirnfläche 10 und einen zurückgebogenen Stabilisierungsstreifen 11 auf, so daß auch sie trotz ihrer Herstellung aus beispielsweise dünnem Blech mit einer Wandstärke von 3 mm hervorragende Festigkeit besitzen. Die Verbindung benachbarter Leitungselemente 1 zur Bildung des Flachkanales erfolgt in üblicher Weise durch Schrauben in Schraublöchern 12. Die zurückgebogenen Stabilisierungsstreifen 11 der Stirnflansche 9 sind bei 13 ausgeklinkt, um Platz für die in gleicher Ebene verlaufenden Stabilisierungsstreifen 8 der Verbindungskanten 5 zu schaffen, so daß die Verbindungskanten 5 über die gesamte Länge des Leitungelementes 1 durchgehend gleiche Ausbildung hoher Festigkeit besitzen.

Im Beispielfalle sind die Verbindungstirnflächen 10 glattflächig dargestellt. Wie jedoch die Ausschnittsvergrößerung aus Fig. 1 zeigt, kann problemlos auch eine Dichtrille 14 in die Verbindungstirnfläche 10 ebenso wie bei Bedarf in den Randstreifen 7 der Verbindungskanten 5 eingearbeitet werden, um zusätzliche Abdichtung durch eingepreßtes Dichtmaterial zu ermöglichen.

Wie ohne weiteres ersichtlich ist, bilden die umgebogenen Stabilisierungsstreifen 8 und 11 an den Rückseiten der Verbindungskanten 5 und der Stirnflansche 9 an allen Seiten des Eckteiles 2 oder des Unterteiles 4 oder des Verbindungsteiles 3 umlaufende Nuten 15, die an der Außenseite der Kanalwand 6 ideale Befestigungsmöglichkeiten bieten. So kann etwa am Randstreifen 7 bzw. am Stabilisierungsstreifen 8 der Verbindungskanten über die gesamte Länge des Flachkanals an beliebiger Stelle eine Aufhängung erfolgen. Weiter kann in die Nuten 15 Dämmaterial in Form von Dämmplatten 16 eingesteckt werden, wie sie in Fig. 2 als Ausriß näher veranschaulicht sind. Die Dämmplatten 16 können außenseitig von Abdeckblechen 17 abgedeckt werden, die ebenfalls in die Nuten 15 eingreifen. Weiterhin kann eine Aussteifung der Kanalwand 6 and der Außenseite durch Profilleisten 18 erfolgen, wobei im Beispielsfalle ein Z-Profil mit einem oberen wandparallelen Schenkel 19 einem unteren wandparallelen Schenkel 20 und einem die Breite der Nut 15 im wesentlichen überdeckenden Steg 21 gewählt ist. Die Profilleiste 18 kann einfach in Schräglage angesetzt und endseitig in die Nuten 15 eingeführt werden. Eine Lagesicherung etwa als Montagehilfe für die Dämmplatten 16 kann bei Bedarf durch Blindniete 22 oder ähnliche Befestigungsmittel an den zurückgebogenen Stabilisierungsstreifen 11 erfolgen. Die Dämmplatten 16 können nun zwischen die umlaufende Nut 15 und Profilleiste 18 eingesetzt und mit dem Abdeckblech 17 abgedeckt werden, wobei das Abdeckblech 17 bereits dadurch in Lage gehalten wird, daß es an drei Seiten in die Nut 15 eingreift und an der verbleibenden Seite am äußeren Bereich des Steges 21 der Profilleiste 18 anschlägt. Bei Bedarf können auch Doppel-T-Profilleisten verwendet werden, um das Abdeckblech 17 an allen Seiten zu halten, jedoch sollten dann die Profilleisten 18 während der Montage lose gehalten werden, um zu starke Verformungen des Abdeckbleches 17 bei Einbringung zu vermeiden.

Die veranschaulichten Eckteile 2, Unterteile 4 und Verbindungsteile 3 können problemlos und gut automatisierbar aus einem ebenen Blechzuschnitt oder dergleichen hergestellt werden. Im Bereich der späteren Ecken der Kanalwand 6 werden in diesen Zuschnitt endseitige Schnitte eingebracht (Klaffung), die in Fig. 1 schematisch mit 23 bezeichnet sind, und es wird die Ausklinkung 13 eingeschnitten. Sodann erfolgen lediglich Verformungsvorgänge durch Abkanten, Ziehen oder Anwalzen zur Bildung der Stabilisierungsstreifen 5, der Randstreifen 7, und der Stirnflansche 9 mit den Verbindungsstirnflächen 10 und Stabilisierungsstreifen 11 sowie ggf. von Dichtrillen 14. Beim Abwinkeln der Stirnflansche 9 klafft der eckseitige Schnitt 23 in die in Fig. 1 strichpunktiert veranschaulichte Stellung, so daß im Eckbereich Material fehlt.

Diese Klaffung zwischen den Rändern des Schnittes 23 wird durch Einsetzen eines mit 24 bezeichneten Ergänzungsteiles geschlossen, welches im Beispielsfalle im Bereich des klaffenden Schnittrandes 23 eingeschweißt und dort verschliffen ist. Auf diese Weise entsteht der Eindruck eines von Hause aus einstückigen umlaufenden Stirnflansches 9. Das eingeschweißte Ergänzungsteil trägt weiter zur Winkelstabilisierung der Kanalwand 6 im Eckbereich bei.

Sämtliche Umkant-, Zieh- oder Anwalzvorgänge lassen sich problemlos automatisieren, und auch das Einschweißen des Ergänzungsteiles 24 mit dem anschließenden Verschleifen ist einer Automatisierung gut zugänglich. Auf diese Weise lassen sich die Eckteile 2, Unterteile 4 und Verbindungsteile 3 problemlos in einer automatisierten Fertigungsstraße einbaufertig herstellen. Anschließend können die Schraublöcher 9a und 12 in ebenfalls problemloser Weise gebohrt werden und steht dann das Kanalteil fertig für einen Zusammenbau etwa der aus den Fig. 3 und 4 ersichtlichen Art zur Verfügung.

## Patentansprüche

1. Leitungselement (1) eines Flachkanals zur Leitung von gasförmigen Medien, das eine Kanalwand aus Metallblech mit Eckkanten aufweist, welche in den Bereichen beiderseits der Eckkanten einstückig ausgebildet ist, und das stirnseitig rings um seinen Öffnungsumfang einen auf der selben Seite der Kanalwand abstehenden ohne Unterbrechung umlaufenden Stirnflansch (9) zur mechanischen Verbindung mit anschließenden Leitungselementen aufweist, in den in die Klaffungen (23) in den Eckbereichen Ergänzungsteile (24) eingeschweißt sind, durch die der Stirnflansch (9) in seiner Ebene geschlossen wird, und der an seiner der Kanalwand (6) abgewandten Kante einen zurückgebogenen Stabilisierungsstreifen (11) aufweist, der in Verbindung mit der Kanalwand und dem Stirnflansch einschließlich des Ergänzungsteils eine sich über die Länge des Stirnflanschs erstreckende Nut (15) bildet, dadurch gekennzeichnet, daß das Leitungselement (1) aus mehreren Kanalsektorteilen (2, 3, 4) mit Verbindungsflanschen (7, 9) zur mechanischen Verbindung mit benachbarten Kanalsektorteilen zusammengesetzt ist und die Verbindungsflansche, von denen die Stirnflansche (9) ein Teil sind, jeweils rings um den Umfang der Kanalsektorteile (2, 3, 4) auf der selben Seite der Kanalwand abstehend ohne Unterbrechung umlaufen und durchgehend mit den zurückgebogenen Stabilisierungsstreifen (8, 11) versehen sind, so daß die durch sie gebildete Nut (15) um die Kontur des Kanalsektorteiles (2, 3, 4) umläuft.

2. Leitungselement nach Anspruch 1, dadurch gekennzeichnet, daß das Ergänzungsteil (24) durch eine eingeschweißte hinterlegte Winkellasche gebildet ist, die im Bereich der Klaffung (23) durch eine Abkröpfung in die Ebene des Stirnflansches (9) gebracht ist.

3. Leitungselement nach Anspruch 1 oder 2, dadurch gekennzeichnet, daß ein Unterteil (4) in Form einer einstückig geschlossenen Wanne ausgebildet ist.

4. Leitungselement nach einem der Ansprüche 1 bis 3, dadurch gekennzeichnet, daß in die Randstreifen (7) der Verbindungskanten (5) bzw. die Verbindungsstirnflächen (10) der Stirnflansche (9) Dichtrillen (14) durch Anformung, insbesondere Anwalzung eingebracht sind.

5. Leitungselement nach einem der Ansprüche 1 bis 4, dadurch gekennzeichnet, daß die Randstreifen (7) der Verbindungskanten (5) und die Stirnflansche (9) von der Kanalwand (6) ausgehend nach außen gebogen sind.

6. Leitungselement nach Anspruch 5, dadurch gekennzeichnet, daß in die durch die Randstreifen (7) und Stabilisierungsstreifen (8) der Verbindungskanten (5) sowie die Verbindungsstirnflächen (10) und Stabilisierungsstreifen (11) der Stirnflansche (9) gebildete umlaufende Nut (15) Dämmplatten (16) eingesteckt sind.

7. Leitungselement nach Anspruch 6, dadurch gekennzeichnet, daß in die Nuten (15) Profilleisten (18) zur Aussteifung der Kanalwand (6) eingesetzt sind.

## Claims

1. A ducting element (1) as part of a flat duct for gaseous media, which has a duct wall of sheet metal with corner edges, which is formed integrally in the parts on both sides of the corner edges and which at the end is provided with an end flange (9) extending circumferentially around the limit of its periphery, said flange projecting on the same side of the duct wall without any interruption in order to provide a mechanical connection with adjacent ducting elements, and in which complementary parts (24) are welded into the gaps (23) in the corner parts (24), by which complementary parts the end flange (9) is closed in its plane, and which at its edge remote from the duct wall (6) has a bent back reinforcing strip (11), which in conjunction with the duct wall and the end flange including the complementary part constitutes a groove (15) extending along the length of the end flange, characterized in that the ducting element (1) consists of a plurality of duct sector parts (2, 3 and 4) with connecting flanges (7 and 9) for mechanically connecting adjacent duct sector parts, and that the connecting flange, of which the end flanges (9) constitute a part, respectively extend around the periphery of the duct sector parts (2, 3 and 4) on the same side of the duct wall and project therefrom continuously and are throughout provided with the bent back reinforcing strips (8 and 11) so that the groove (15) formed by them extends around the outline of the duct sector part (2, 3 and 4).

2. The ducting element as claimed in claim 1, characterized in that the complementary part (24) is constituted by a welded on, backed angle lug which adjacent to the gap (23) is moved into the plane of the end flange (9) by angling it.

3. The ducting element as claimed in claim 1 or claim 2, characterized in that a lower part (4) is designed in the form of an integrally closed trough.

4. The ducting element as claimed in any of claims 1 through 3, characterized in that gasket grooves (14) are formed, specially by rolling, in the edge strips (7) of the connecting edges (5) or respectively in the connecting end surfaces (10) of the end flanges (9).

5. The ducting element as claimed in any of claims 1 through 4, characterized in that the edge strips (7) of the connecting edges (5) and the end flanges (9) are bent from the duct wall (6) outwards.

6. The ducting as claimed in claim 5, characterized in that damping boards (16) are inserted into the peripheral groove (15) formed by the edge strips (7) and reinforcing strips (8) of the connecting edges (5) and the connecting end surfaces (10) and the reinforcing strips (11) of the end flanges (9).

7. The ducting as claimed in claim 6, characterized in that sections (18) are inserted into the grooves (15) in order to stiffen the duct wall (6).

**Revendications**

1. Elément de conduite (1) d'un canal plat pour le transport de milieux gazeux, qui présente :

- une paroi en tôle métallique comportant des arêtes angulaires et constituée d'une seule pièce dans les parties situées des deux côtés desdites arêtes angulaires, et du côté frontal, tout autour de son ouverture, une bride frontale (9) périphérique ininterrompue faisant saillie d'un même côté de la paroi afin d'assurer la liaison mécanique avec les éléments de conduite raccordés, du fait que dans les espaces angulaires (23) de la bride frontale (9) sont intégrées par soudure des pièces complémentaires (24) au moyen desquelles la bride frontale (9) est fermée dans son plan, tandis que son arête opposée à la paroi (6), comprend une bande de stabilisation (11) repliée vers l'arrière, formant en association avec la paroi et la bride frontale, y compris la pièce complémentaire, une rainure (15) s'étendant sur toute la longueur de la bride frontale, caractérisé en ce que l'élément de conduite (1) est réalisé par la combinaison de plusieurs tronçons (2, 3, 4) munis de brides de liaison (7, 9) destinées à assurer la liaison mécanique avec les tronçons adjacents et en ce que les brides de liaison dont les brides frontales (9) font partie, sont disposées sans interruption respectivement sur le pourtour des tronçons (2, 3, 4) de l'élément de conduite en faisant saillie d'un même côté de la paroi et sont munies de manière continue de bandes de stabilisation (8, 11) repliées vers l'arrière, de telle sorte que la rainure (15) ainsi formée entoure complètement de pourtour du tronçon (2, 3, 4).

2. Elément de conduite selon la revendication 1, caractérisé en ce que la pièce complémentaire (24) est formée par une languette angulaire, rapportée par soudure qui, par un repliage, est amenée dans le plan de la bride frontale (9) dans la zone de l'espace (23).

3. Elément de conduite selon la revendication 1 ou 2, caractérisé en ce qu'une partie inférieure (4) est réalisée en forme d'une cuvette fermée d'une seule pièce.

4. Elément de conduite selon l'une des revendications 1 à 3, caractérisé en ce que dans les bandes des bords (7) des arêtes d'assemblage (5) ou les faces frontales d'assemblage (10) des brides frontales (9) sont incorporées des gorges d'étanchéité (14) au moyen d'un procédé de façonnage ou d'emboutissage.

5. Elément de conduite selon l'une des revendications 1 à 4, caractérisé en ce que les bandes des bords (7) des arêtes d'assemblage (5) et les brides frontales (9) sont repliées vers l'extérieur à partir de la paroi (6).

6. Elément de conduite selon la revendication 5, caractérisé en ce que des plaques d'isolation (16) sont insérées dans la rainure périphérique (15), formée par les bandes des bords (7) et les bandes de stabilisation (8) des arêtes d'assemblage (5), ainsi que par les faces frontales d'assemblage (10) et les bandes de stabilisation (11) des brides frontales (9).

7. Elément de conduite selon la revendication 6, caractérisé en ce que dans les rainures (15) sont insérés des profilés (18) pour rendre rigide la paroi (6).